# EUROPÄISCHE PATENTSCHRIFT

(11) **EP 1 992 793 B1**
(45) Veröffentlichungstag und Bekanntmachung des Hinweises auf die Patenterteilung: **26.11.2014**
(21) Anmeldenummer: 07009629.2
(22) Anmeldetag: 14.05.2007
(51) Int. Cl.: F01K 23/10, F23N 5/02, F23G 5/027, F23G 5/46, F23G 5/50, F23J 3/04, F02C 3/28, C10J 3/00, F01K 23/06, F25J 3/04, C10J 3/66

(54) **Verfahren zur Erzeugung von Strom aus Abfallgütern aller Art**
Method for generating electric power from waste products of all types
Procédé de production d'énergie électrique à base de déchets de tous types

(43) Veröffentlichungstag der Anmeldung: 19.11.2008
(73) Patentinhaber: Litesso-Anstalt, 9497 Triesenberg (LI)
(72) Erfinder: Kiss, Günter Hans, 28040 Lesa (IT)
(74) Vertreter: Pfenning, Meinig & Partner GbR

(56) Entgegenhaltungen:
- EP-A- 0 634 562
- EP-A1- 0 465 193
- EP-A1- 0 622 535
- EP-A2- 1 043 557
- DE-A1- 19 928 581
- US-A- 4 697 413
- US-A- 5 865 023
- US-A1- 2007 033 942
- US-A1- 2007 082 306

## Beschreibung

Vorliegende Erfindung betrifft ein Verfahren zur Erzeugung von Strom aus Abfällen aller Art, bei dem durch die Behandlung der Abfälle ein Synthesegas erzeugt wird und mit diesem Synthesegas eine Gasturbine betrieben wird. Ein zusätzlicher Synergieeffekt zur Steigerung des Wirkungsgrads der Gasturbine ergibt sich daraus, dass diese zusätzlich mit komprimiertem Inertgas betrieben wird.

Das Thermoselect-Verfahren ist eine Hochtemperatur-Vergasung, bei der Abfälle unterschiedlichster Zusammensetzung umweltschonend behandelt und in nutzbare Rohstoffe transformiert werden.

Durch die Vergasung der organischen Müllbestandteile mit reinem Sauerstoff wird eine Prozesstemperatur von bis zu 2.000 °C erzielt, hierbei wird u.a. ein Synthesegas gewonnen, das im wesentlichen aus Wasserstoff, Kohlenmonoxid und Kohlendioxid besteht. Dieses Synthesegas verlässt den Hochtemperaturreaktor mit einer Temperatur von ca. 1.200 °C und einem Überdruck von ca. 200 bis 300 mbar. Nach einer Schockkühlung auf unter 100 °C durchläuft es verschiedene Reinigungsstufen und kann anschließend als Energieträger oder als Rohstoff genutzt werden.

Soll aus dem Synthesegas Strom produziert werden, kann es in einem Kessel zur Herstellung von Dampf eingesetzt werden, der in einer Dampfturbine verstromt wird. Der elektrische Wirkungsgrad liegt hier bei ca. 25 %.

Ein höherer Wirkungsgrad ist erzielbar, wenn das Synthesegas als Brennstoff in einer Gasturbine oder in einem Gasmotor eingesetzt wird. Um das Synthesegas in einer Gasturbine zu verstromen, muss es zunächst auf ca. 20 - 25 bar verdichtet werden, so dass ein Teil des produzierten Stroms zur Verdichtung des Gases benötigt wird. Der Nettowirkungsgrad der Verstromung beträgt ca. 30 %. Eine Erhöhung des elektrischen Wirkungsgrads auf ca. 33 % kann erreicht werden, wenn die ca. 480 °C heißen Abgase der Gasturbine in einen Abhitzekessel zur Herstellung von Dampf genutzt werden, und diese anschließend verstromt werden. In diesem Fall wird die chemische Energie des Synthesegases und die thermische Energie der heißen Abgase aus der Turbine zur Stromproduktion genutzt.

Eine mit Synthesegas betriebene Gasturbine ist aus US-A-5865023 bekannt.

Wird das Synthesegas in einem Gasmotor eingesetzt, ist ein elektrischer Wirkungsgrad von ca. 35 % erreichbar.

Ausgehend von den nur unzulänglichen Wirkungsgraden der Stromgewinnung mit aus dem Stand der Technik bekannten Verfahren war es somit Aufgabe vorliegender Erfindung, ein Verfahren zur Stromgewinnung aus Abfallgütern aller Art bereitzustellen, bei dem ein verbesserter Wirkungsgrad und somit eine verbesserte Stromausbeute erzielbar ist.

Diese Aufgabe wird mit den Merkmalen des Patentanspruchs 1 gelöst. Mit den Patentansprüchen 13 und 14 werden Verwendungszwecke des Verfahrens genannt. Die abhängigen Ansprüche stellen dabei vorteilhafte Ausgestaltungsformen des Verfahrens dar.

Erfindungsgemäß wird ein Verfahren zur Erzeugung von Strom mit einem von einer Gasturbine angetriebenen Stromgenerator bereitgestellt, wobei die Gasturbine, die eine Verdichtereinheit, eine Brennkammer und eine Turbine umfasst, durch Verbrennen von Synthesegas betrieben wird, das durch Behandlung von Abfällen aller Art erzeugt wird, wobei die Gasturbine zusätzlich mit komprimiertem Inertgas betrieben wird, das vorzugsweise vorher auf die Prozesstemperatur der Turbine erhitzt wird. Dabei wird das unter Druck stehende Inertgas in die Gasturbine eingespeist, wobei das Inertgas expandiert und mit der durch Expansion freiwerdenden kinetischen Energie die Turbine mit angetrieben wird.

Somit wird eine wesentliche Erhöhung des elektrischen Wirkungsgrades erzielt. In der Gasturbine wird somit nicht nur Synthesegas, sondern auch ein Inertgas eingesetzt. Das Synthesegas wird zunächst auf den notwendigen Betriebsdruck verdichtet, in der Brennkammer der Turbine verbrannt, um dann die heißen Abgase zum Betreiben der Turbine einzusetzen. Das Inertgas muss ebenfalls über den notwendigen Betriebsdruck verfügen, um es problemlos zum Antreiben der Turbine zu nutzen. Mit dem erfindungsgemäßen Verfahren lassen sich dabei Wirkungsgrade von > 40 % erzielen.

In einer vorteilhaften Ausgestaltungsform werden die heißen Abgase und das bevorzugt heiße Inertgas anschließend zusammen in einem Abhitzekessel zur Dampfproduktion eingesetzt, der in einer Dampfturbine verstromt wird. Mit dieser hier beschriebenen Konfiguration kann ein elektrischer Wirkungsgrad von bis zu 55 % netto erzielt werden.

Vorzugsweise wird das Synthesegas bei der Behandlung von Abfällen aller Art erzeugt, wobei die Abfallgüter chargenweise zu Kompaktpaketen komprimiert und eine zonenweise Temperaturbeaufschlagung mit mindestens einer Niedertemperaturzone und mindestens einer Hochtemperaturzone durchlaufen. In der Hochtemperaturzone werden aus den organischen Bestandteilen des Entsorgungsguts durch Eindüsen von reinen Sauerstoffs Synthesegas erzeugt. Dieses Synthesegas durchläuft zunächst eine gasdurchlässige Schüttung, dann eine oberhalb der Schüttung befindliche Stabilisierungszone und wird anschließend aus der Stabilisierungszone abgeleitet.

Bei der Vergasung der organischen Bestandteile mit reinem Sauerstoff wird eine Prozesstemperatur erreicht, die zur thermischen Trennung bzw. Stoffwandlung führt. Die anfallenden festen anorganischen Rückstände werden in eine Hochtemperaturschmelze überführt (Thermoselect-Verfahren).

Insbesondere ist das Inertgas Stickstoff, das vorteilhaft durch einen dem Thermoselect-Verfahren vorgeschalteten Luftzerlegungsprozess erzeugt wird, wobei der beim Luftzerlegungsprozess anfallende Sauerstoff in die mindestens eine Hochtemperaturzone aufgegeben wird. Der Vorteil besteht nun darin, dass der beim Thermoselect-Verfahren ansonsten ungenutzte Stickstoff verwendet werden kann.

Das Verhältnis zwischen den Gasmengen, also Inertgas und Synthesegas, das dabei zum Antreiben der Turbine eingesetzt wird, kann dabei in einem weiten Bereich variieren. Um die Mengenangaben der beiden, z.T. bei unterschiedlichen Drücken eingesetzten Gase zu vereinfachen, werden die Verhältnisse so angegeben, als wenn beide Gase bei Normaldruck vorliegen würden. Bevorzugte Volumenverhältnisse liegen hier zwischen 10:1 und 1:10, bevorzugt zwischen 2 und 1.

Vorteilhaft ist dabei vorgesehen, dass zumindest ein Teil des Inertgases direkt auf die Turbine - also den die Gasturbine antreibenden Teil - geleitet wird. Somit trägt das komprimierte Inertgas mit zum Antrieb der Gasturbine und daher zur Steigerung des Wirkungsgrades und der Energieausbeute bei.

Als alternative und/oder zusätzliche Ausführungsform ist es ebenso vorteilhaft, wenn zumindest ein Teil des Inertgases mit dem Synthesegas vermischt und das Gasgemisch der Brennkammer zugeführt wird. Diese Verdünnung des Synthesegases führt zwar zu einem verringerten Heizwert des Gasgemisches im Vergleich zu reinem Synthesegas, jedoch ist der Heizwert des Synthesegases so hoch, dass durch eine gezielte Zugabe des Inertgases immer noch eine Zündung möglich ist. Vorteilhaft ist dabei, dass dadurch eine weitere Volumenerhöhung erzielt wird, da sich das Inertgas beim Brennprozess aufheizt und somit ausdehnt. Dies führt ebenso zu einem verbesserten Wirkungsgrad.

Vorzugsweise wird der Druck des Synthesegases vor dem Einspeisen in die Gasturbine zwischen 10 und 100 bar, bevorzugt zwischen 15 und 40 bar, besonders bevorzugt zwischen 20 und 25 bar eingestellt.

In einer weiteren vorteilhaften Ausführungsform wird der Druck des Inertgases vor dem Einspeisen in die Gasturbine zwischen 10 und 100 bar, bevorzugt zwischen 15 und 40 bar, besonders bevorzugt zwischen 20 und 25 bar eingestellt.

Dabei ist es weiterhin vorteilhaft, wenn die Temperatur des Inertgases vor dem Einspeisen in die Gasturbine zwischen 100 °C und 700, bevorzugt zwischen 300 und 600 °C, besonders bevorzugt zwischen 350 und 450 °C eingestellt wird.

Eine noch weitere Steigerung des Wirkungsgrades der Gasturbine kann erzielt werden, wenn die thermische Energie der aus der Gasturbine austretenden Abgase zur Dampferzeugung genutzt wird. Mit diesem erzeugten Dampf kann die Dampfturbine, über die ebenfalls z.B. mittels eines Generators Strom erzeugt werden kann, eine weitere Energieausbeute erzielt werden. Vorteilhaft wird die Dampferzeugung mit einem Wärmetauscher durchgeführt. Die dabei erzielten Wirkungsgrade können 57 % erreichen und noch übersteigen.

Erfindungsgemäß werden ebenso Verwendungszwecke des Verfahrens angegeben. Das Verfahren eignet sich somit zur Stromerzeugung und/oder zur Abfallentsorgung.

Das erfindungsgemäße Verfahren wird anhand der nachfolgenden beispielhaften Ausführung näher beschrieben. Die dabei genannten Parameter sollen dabei keinesfalls als limitierend verstanden werden, sondern sind lediglich beispielhafter Natur.

Die Bereitstellung des Inertgases ist ein spezieller Vorteil der Thermoselect-Technologie. Da die Vergasung der organischen Müllbestandteile mit reinem Sauerstoff durchgeführt wird, verfügt jede Thermoselect-Anlage grundsätzlich über eine eigene Tieftemperatur-Zerlegungsanlage. Da rd. 20 % der Luft auf Sauerstoff entfällt, der zur Vergasung genutzt wird, müsste ca. 80 % der Luft, die als elementarer Stickstoff vorliegt, in die Atmosphäre abgegeben werden. Dieser bisher nicht genutzte Stickstoff wird erfindungsgemäß als Inertgas in der Gasturbine eingesetzt. Die Produktion des komprimierten Stickstoffs verursacht somit keine zusätzlichen Kosten, da er als Kuppelprodukt in der Luftzerlegungsanlage anfällt.

Der wirtschaftliche Vorteil dieser neuen Verfahrenskonfiguration soll beispielhaft an einer Thermoselect-Anlage mit einer thermischen Linie und einem Durchsatz von 15 t/h dargestellt werden. Bei einem Heizwert von 10 MJ/kg werden zur Vergasung einer Tonne Müll ca. 350 Nm³ Sauerstoff benötigt, d.h. 5.250 Nm³ pro Stunde. In der Luftzerlegungsanlage fallen daher ca. 21.000 Nm³ Stickstoff als Kuppelprodukt an, die in der Gasturbine mit eingesetzt werden können.

Pro Stunde werden ca. 15.000 Nm³ Synthesegas mit einem Heizwert von ca. 2,2 kWh/Nm³ gewonnen. Die thermische Leistung des Synthesegases beträgt somit 33 MW.

Wird das Synthesegas in einem Gasmotor mit einem elektrischen Wirkungsgrad von 35 % verstromt, ergibt sich eine elektrische Leistung von 11,55 MW. Wird hingegen die neue Verfahrenskonfiguration zur Verstromung des Synthesegases mit einem elektrischen Wirkungsgrad von 55 % eingesetzt, beträgt die elektrische Leistung 18,15 MW, es ergibt sich somit eine Leistungssteigerung um 6,6 MW = 57 %.

## Patentansprüche

1. Verfahren zur Erzeugung von Strom mit einem von einer Gasturbine angetriebenen Stromgenerator, wobei die Gasturbine, eine Verdichtereinheit, eine Brennkammer und eine Turbine umfasst und durch Verbrennen von Synthesegas betrieben und das Synthesegas durch Behandlung von Abfällen aller Art erzeugt wird, die Gasturbine zusätzlich mit komprimiertem Inertgas betrieben wird, **dadurch gekennzeichnet,** das Synthesegas bei der Behandlung von Abfällen aller Art erzeugt wird, wobei die Abfallgüter chargenweise zu Kompaktpaketen komprimiert und eine zonenweise Temperaturbeaufschlagung mit mindestens einer Niedertemperatur- und einer Hochtemperaturzone durchlaufen, und das in der Hochtemperaturzone aus dem organischen Bestandteil des Entsorgungsgutes durch Eindüsen von Sauerstoff Synthesegas erzeugt wird, wobei das auf Normaldruck genormte Volumenverhältnis von Inertgas zu Synthesegas zwischen 10 : 1 und 1 ; 10 liegt.

2. Verfahren nach einem der vorhergehenden Ansprüche, **dadurch gekennzeichnet, dass** das Inertgas Stickstoff ist.

3. Verfahren nach einem der vorhergehenden Ansprüche, **dadurch gekennzeichnet, dass** das Inertgas, bevorzugt Stickstoff, durch einen der Synthesegas-Erzeugung vorgeschalteten Luftzerlegungsprozess erzeugt wird, wobei der beim Luftzerlegungsprozess anfallende Sauerstoff in die mindestens eine Hochtemperaturzone aufgegeben wird.

4. Verfahren nach einem der vorhergehenden Ansprüche, **dadurch gekennzeichnet, dass** das auf Normaldruck genormte Volumenverhältnis von Inertgas zu Synthesegas zwischen 2 : 1 und 1 : 1 liegt.

5. Verfahren nach einem der vorhergehenden Ansprüche, **dadurch gekennzeichnet, dass** zumindest ein Teil des Inertgases auf die Turbine geleitet wird.

6. Verfahren nach einem der vorhergehenden Ansprüche, **dadurch gekennzeichnet, dass** zumindest ein Teil des Inertgases mit dem Synthesegas vermischt und das Gasgemisch der Brennkammer zugeführt wird.

7. Verfahren nach einem der vorhergehenden Ansprüche, **dadurch gekennzeichnet, dass** der Druck des Synthesegases vor dem Einspeisen in die Gasturbine zwischen 10 und 100 bar, bevorzugt zwischen 15 und 40 bar, besonders bevorzugt zwischen 20 und 25 bar eingestellt wird.

8. Verfahren nach einem der vorhergehenden Ansprüche, **dadurch gekennzeichnet, dass** der Druck des Inertgases vor dem Einspeisen in die Gasturbine zwischen 10 und 100 bar, bevorzugt zwischen 15 und 40 bar, besonders bevorzugt zwischen 20 und 25 bar eingestellt wird.

9. Verfahren nach einem der vorhergehenden Ansprüche, **dadurch gekennzeichnet, dass** die Temperatur des Inertgases vor dem Einspeisen in die Gasturbine zwischen 100 °C und 700 bevorzugt zwischen 300 und 600 °C, besonders bevorzugt zwischen 350 und 450 °C eingestellt wird.

10. Verfahren nach einem der vorhergehenden Ansprüche, **dadurch gekennzeichnet, dass** die thermische Energie der aus der Gasturbine austretenden Gase zur Dampferzeugung genutzt wird.

11. Verfahren nach vorhergehendem Anspruch **dadurch gekennzeichnet, dass** die Dampferzeugung mit einem Wärmetauscher durchgeführt wird.

12. Verfahren nach einem der beiden vorhergehenden Ansprüche, **dadurch gekennzeichnet, dass** mit dem Dampf eine Dampfturbine mit Generator zur Stromerzeugung angetrieben wird.

13. Verwendung des Verfahrens nach einem der vorhergehenden Ansprüche zur Stromerzeugung.

14. Verwendung des Verfahrens nach einem der Ansprüche 1 bis 12 zur Abfallentsorgung.

## Claims

1. Method for generating current with a current generator driven by a gas turbine, the gas turbine comprising a compressor unit, a combustion chamber and a turbine and being operated by combustion of synthesis gas, and the synthesis gas being produced by treatment of waste of all types, the gas turbine being operated in addition with compressed inert gas,
***characterised in that***
the synthesis gas is produced during treatment of waste of all types, the waste materials being compressed, in batches, to form compact packets and being subjected to a temperature application, in zones, with at least one low-temperature- and one high-temperature zone, and, in the high-temperature zone, synthesis gas being produced from the organic component of the disposal material by injection of oxygen, the volume ratio of inert gas to synthesis gas, standardised to normal pressure, being between 10 : 1 and 1 : 10.

2. Method according to one of the preceding claims, **characterised in that** the inert gas is nitrogen.

3. Method according to one of the preceding claims, **characterised in that** the inert gas, preferably nitrogen, is produced by an air-separation process which precedes the synthesis gas production, the oxygen produced during the air-separation process being fed into the at least one high-temperature zone.

4. Method according to one of the preceding claims, **characterised in that** the volume ratio of inert gas to synthesis gas, standardised to normal pressure, is between 2 :1 and 1 : 1.

5. Method according to one of the preceding claims, **characterised in that** at least a part of the inert gas is conducted to the turbine.

6. Method according to one of the preceding claims, **characterised in that** at least a part of the inert gas is mixed with the synthesis gas and the gas mixture is supplied to the combustion chamber.

7. Method according to one of the preceding claims, **characterised in that** the pressure of the synthesis gas before being fed into the gas turbine is set between 10 and 100 bar, preferably between 15 and 40 bar, particularly preferred between 20 and 25 bar.

8. Method according to one of the preceding claims, **characterised in that** the pressure of the inert gas before being fed into the gas turbine is set between 10 and 100 bar, preferably between 15 and 40 bar, particularly preferred between 20 and 25 bar.

9. Method according to one of the preceding claims, **characterised in that** the temperature of the inert gas before being fed into the gas turbine is set between 100°C and 700, preferably between 300 and 600°C, particularly preferred between 350 and 450°C.

10. Method according to one of the preceding claims, **characterised in that** the thermal energy of the gases emerging from the gas turbine is used for steam production.

11. Method according to the preceding claim, **characterised in that** the steam production is implemented with a heat exchanger.

12. Method according to one of the two preceding claims, **characterised in that**, with the steam, a steam turbine with a generator is driven for current generation.

13. Use of the method according to one of the preceding claims for current generation.

14. Use of the method according to one of the claims 1 to 12 for waste disposal.

## Revendications

1. Procédé pour la production d'électricité avec un générateur d'électricité entraîné par une turbine à gaz, la turbine à gaz comprenant une unité de compresseur, une chambre de combustion et une turbine, et alimenté par la combustion d'un gaz de synthèse, le gaz de synthèse étant produit par le traitement de déchets de toutes sortes, la turbine à gaz étant en outre alimentée en gaz inerte comprimé, **caractérisé en ce que** le gaz de synthèse est produit lors du traitement de déchets de toutes sortes, les déchets étant comprimés par lots en paquets compacts et traversent des zones de températures avec au moins une zone de basse température et une zone de haute température, et **en ce que** le gaz de synthèse est produit dans la zone de haute température à partir de la partie organique des déchets par pulvérisation d'oxygène, le rapport volumique, normalisé à la pression normale, entre le gaz inerte et le gaz de synthèse se situant entre 10:1 1 et 1:10.

2. Procédé selon l'une des revendications précédentes, **caractérisé en ce que** le gaz inerte est de l'azote.

3. Procédé selon l'une des revendications précédentes, **caractérisé en ce que** le gaz inerte, de préférence de l'azote, est produit par un processus de fractionnement de l'air en amont de la production de gaz de synthèse, l'oxygène produit lors du processus de fractionnement de l'air étant introduit dans l'au moins une zone de haute température.

4. Procédé selon l'une des revendications précédentes, **caractérisé en ce que** le rapport volumique, normalisé à la pression normale, entre le gaz inerte et le gaz de synthèse se situe entre 2:1 et 1:1.

5. Procédé selon l'une des revendications précédentes, **caractérisé en ce qu'**au moins une partie du gaz inerte est conduit vers la turbine.

6. Procédé selon l'une des revendications précédentes, **caractérisé en ce qu'**au moins une partie du gaz inerte est mélangé avec le gaz de synthèse et le mélange de gaz est introduit dans la chambre de combustion.

7. Procédé selon l'une des revendications précédentes, **caractérisé en ce que** la pression du gaz de synthèse est réglée, avant l'introduction dans la turbine à gaz, entre 10 et 100 bar, de préférence entre 15 et 40 bar, de manière particulièrement préférée entre 20 et 25 bar.

8. Procédé selon l'une des revendications précédentes, **caractérisé en ce que** la pression du gaz inerte est réglée, avant l'introduction dans la turbine à gaz, entre 10 et 100 bar, de préférence entre 15 et 40 bar, de manière particulièrement préférée entre 20 et 25.

9. Procédé selon l'une des revendications précédentes, **caractérisé en ce que** la température du gaz inerte est réglée, avant l'introduction dans la turbine à gaz, entre100°C et 700°C, de préférence entre 300°C et 600°C, de manière particulièrement préférée entre 350 et 450°C.

10. Procédé selon l'une des revendications précédentes, **caractérisé en ce que** l'énergie thermique des gaz sortant de la turbine à gaz est utilisée pour la production de vapeur.

11. Procédé selon la revendication précédente, **caractérisé en ce que** la production de vapeur est effectuée à l'aide d'un échangeur de chaleur.

12. Procédé selon l'une des revendications précédentes, **caractérisé en ce que** la vapeur permet d'entraîner une turbine à vapeur avec un générateur pour la production d'électricité.

13. Utilisation du procédé selon l'une des revendications précédentes pour la production d'électricité.

14. Utilisation du procédé selon l'une des revendications 1 à 12 pour l'élimination de déchets.
